Europäisches Patentamt

European Patent Office

Office européen des brevets

(11) Publication number: **0 156 506**
**B1**

(12) **EUROPEAN PATENT SPECIFICATION**

(45) Date of publication of patent specification: **10.08.88**

(51) Int. Cl.⁴: **A 47 J 43/046, A 47 J 43/06**

(21) Application number: **85301182.3**

(22) Date of filing: **22.02.85**

(54) A food processing arrangement.

(30) Priority: **08.03.84 GB 8406130**

(43) Date of publication of application:
**02.10.85 Bulletin 85/40**

(45) Publication of the grant of the patent:
**10.08.88 Bulletin 88/32**

(84) Designated Contracting States:
**AT BE CH DE FR GB IT LI LU NL SE**

(56) References cited:
**EP-A-0 058 118**
**DE-A-1 529 235**
**DE-A-2 809 416**
**FR-A-2 090 737**
**GB-A- 701 929**
**GB-A-2 082 713**
**US-A-4 362 219**

(73) Proprietor: **Kenwood Limited**
**New Lane**
**Havant Hampshire, P09 2NH (GB)**

(72) Inventor: **Royle, Terence Gordon**
**12, Othello Drive**
**Waterlooville Hampshire P07 8LA (GB)**

(74) Representative: **Marsh, Robin Geoffrey et al**
**Thorn EMI Patents Limited The Quadrangle**
**Westmount Centre Uxbridge Road**
**Hayes Middlesex, UB4 0HB (GB)**

## Description

This invention relates to a food processing arrangement as set forth in the preamble of claim 1.

Conventional food processors and mixers are usually provided with a vertical drive shaft into which various mixing and/or processing attachments are inserted to provide the required preparation of foodstuffs placed within a container, such as a bowl, provided on the processor or mixer.

The shaft is generally either driven from the top thereof and arranged to provide rotation of a whisk, dough hook, etc, as in the case of a mixer, or from the base thereof to provide rotation of a cutter blade, etc, as in the case of a processor.

In addition to a vertical drive shaft, some food mixers are provided with a horizontal shaft connected to a gearing mechanism and a motor for rotationally driving the vertical shaft. Horizontally-disposed attachments, such as a food mincer, can opener, cream maker, pasta maker, coffee grinder, etc, may then be rotationally driven by the horizontal shaft. Additionally the horizontal shaft may, by suitable gearing, be provided with a slower rotational speed than the vertical shaft.

A food processing arrangement of the type set forth in the preamble of claim 1 is described in DE—A—2809416.

It is an object of the present invention to provide a food processing arrangement, having a vertical drive shaft driven from the base thereof, which is also capable of receiving horizontally-disposed attachments for the preparation of foodstuffs.

According to the present invention there is provided a food processing arrangement comprising a base portion and a housing accommodating motor-driven gearing means providing first and second outputs extending from opposite sides of said housing for rotatably driving respective food processing attachments, said housing being pivotally mounted on said base portion, such that said first output is accessible when said housing is in an unpivotted position relative to said base portion and said second output is accessible when said housing is in a pivotted position relative to said base portion, characterised in that said first output is arranged to drive a first attachment having a vertical rotational axis; in that said housing is arranged in its unpivotted position to support a first vessel in a location over said first output so that food within said vessel can be processed by said first attachment; in that said second output is arranged to drive a second attachment having a horizontal rotational axis; and in that said base portion is recessed to locate a second vessel for collecting food processed by said second attachment when said housing is in its pivotted position and to accommodate said second output when said housing is in its unpivotted position.

The gearing arrangement may be constructed so that the oppositely-extending outputs are co-axial.

The gearing arrangement is preferably rigidly connected to the motor housing and the housing is pivotally connected to the base portion, so that the housing and the gearing arrangement are together capable of pivotal movement relative to said base portion.

The food processing arrangement is preferably provided with a control panel which is connected to the base portion so as to remain in a fixed position upon pivotal movement of the gearing arrangement.

The gearing arrangement is preferably constructed so that the generally horizontal rotational axis provides a lower rotational speed than the generally vertical axis.

The housing is also preferably provided with a second generally vertical rotational axis, which provides a higher rotational speed than the first-mentioned vertical rotational axis.

The invention will now be further described by way of example only with reference to the accompanying drawings wherein:

Figure 1 shows a schematic side view of one embodiment of a food processing arrangement, in accordance with the present invention,

Figure 2 shows a sectional view of the embodiment shown in Figure 1,

Figure 3 shows a schematic side view of the embodiment in a pivotted position, and

Figure 4 shows a sectional view of the embodiment as shown in Figure 3.

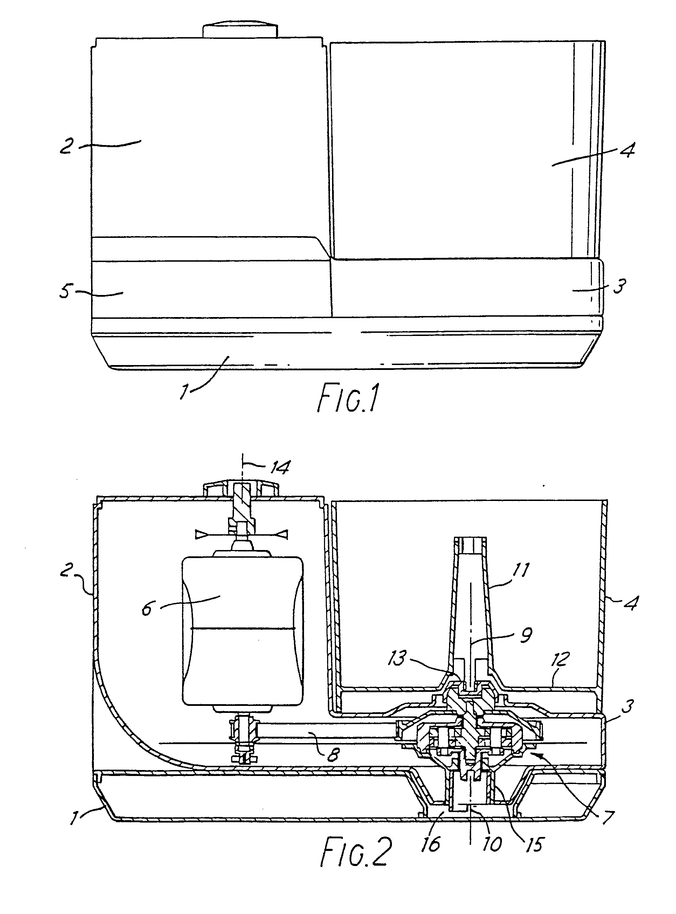

Figure 1 shows a food processing arrangement having a base 1, a motor housing 2 pivotally connected to the base 1 and integrally connected to a gearbox housing 3, upon which a bowl 4 for containing foodstuffs to be processed is located. A control panel 5, accommodating suitable user-operable control knobs, etc, for operating the processing arrangement, is attached to the base 1.

In Figure 2, it can be seen that a motor 6 accommodated within the housing 2 drives a cycloidal action gearbox 7 via a belt 8, the gearbox 7 being accommodated within the housing 3. The gearbox 7 is arranged so as to provide two oppositely-extending co-axial rotational drive axes 9 and 10, the drive speed associated with axis 10 preferably having a lower rotational speed than that associated with axis 9.

The bowl 4 is provided with a drive shaft 11, which is integrally formed with base 12 of the bowl 4 and is located over hub 13, which is concentric with the axis 9. Any suitable attachment, such as a whisk, dough hook, cutter blade, etc, for preparing foodstuffs within the bowl 4 may then be inserted down into the shaft 11 and driven for rotation by the motor 6, via the gearbox 7. The bowl 4 is preferably provided with a lid (not shown), which may also be provided with a safety interlock mechanism, so as to prevent rotation of the attachments before the lid is correctly positioned on the bowl 4.

The arrangement may also be provided with a second vertical rotational drive axis 14, which can be employed for operation of a food blender or liquidiser attachment requiring higher rotational speeds than the food processor attachments driven about axis 9.

Drive axis 10, extending from gearbox 7 in an opposite direction to drive axis 9 has a concentric hub 15, which is accommodated within a hollow 16 in the base 1 of the arrangement. With the food processing arrangement in this position, the axis 10 cannot be employed for rotational drive of attachments.

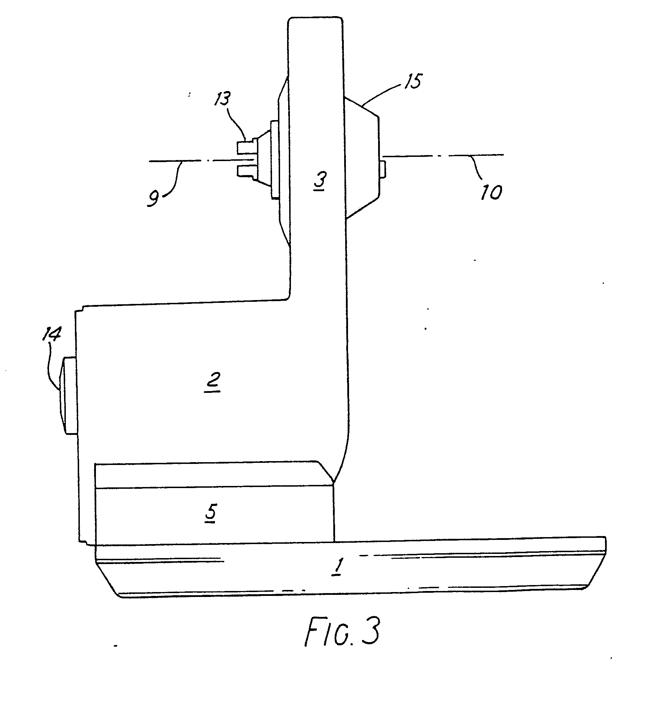

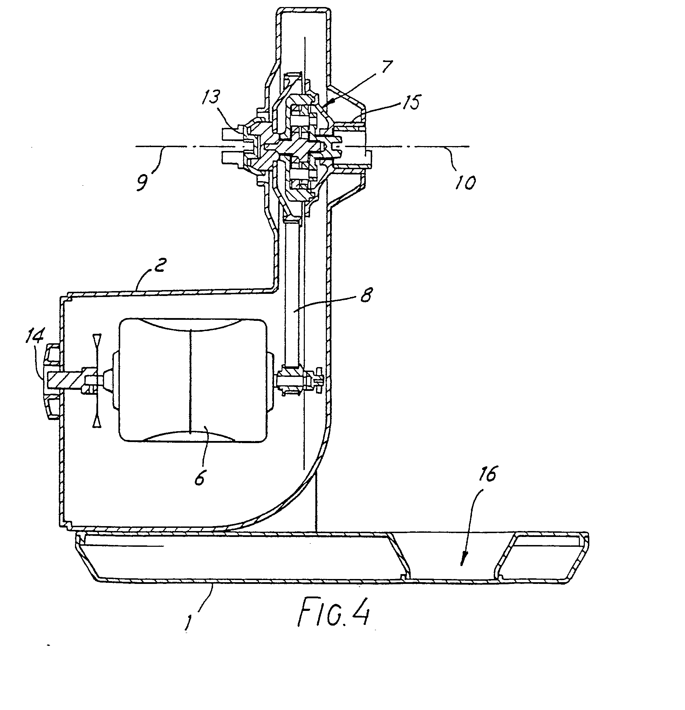

However, Figures 3 and 4 illustrate the arrangement with the housings 2 and 3 in a pivotted position relative to the base 1, the bowl 4 shown in Figures 1 and 2 having been removed. It can be seen that the arrangement is particularly advantageous in that, upon pivotal movement of the housings 2 and 3, not only does the base 1 remain in a fixed position, but also the control panel 5 remains fixed, thereby facilitating control of the operation of the arrangement, irrespective of the position of housings 2 and 3.

In the pivotted position, axis 10 is readily accessible, so that horizontally-disposed attachments, such as a food mincer, can opener, cream maker, pasta maker, coffee grinder, etc, which are generally required to be rotated at a lower rotational speed than food processor attachments, may be inserted into hub 15 for rotational drive by the motor 6, the gearbox 7 providing the appropriate speed reduction.

A suitable container (not shown) for collecting foodstuffs processed by a horizontally-disposed attachment driven about axis 10 may be positioned upon the base 1 alongside the pivotted housing 2, and may furthermore be correctly located by insertion of the container base into the hollow 16.

Additionally, the base 1 of the arrangement may be provided with storage space for the various attachments and the control panel 5 may include electrical components for providing such facilities as a timer for controlling the food preparation time, a digital temperature sensor and/or weighing scales, the required storage space for these facilities also being provided on the base 1.

A suitable latching mechanism may be provided to latch the housings 2 and 3 into either the first unpivotted position or the pivotted position.

Furthermore, an interlock switching arrangement may be provided for disabling the arrangement unless the housings 2 and 3 are latched into either the unpivotted or pivotted position.

It can thus be envisaged that the present invention provides a compact, but versatile, food processing arrangement, capable of receiving and driving different types of attachments for preparing foodstuffs in a variety of ways, whilst remaining easily controllable by a user, irrespective of the attachment being utilised.

## Claims

1. A food processing arrangement comprising a base portion (1) and a housing (2) accommodating motor-driven gearing means (7) providing first (13) and second (15) outputs extending from opposite sides of said housing (2) for rotatably driving respective food processing attachments, said housing (2) being pivotally mounted on said base portion (1), such that said first output (13) is accessible when said housing (2) is in an unpivotted position relative to said base portion (1) and said second output (15) is accessible when said housing (2) is in a pivotted position relative to said base portion (1), characterised in that said first output (13) is arranged to drive a first attachment having a vertical rotational axis; in that said housing (2) is arranged in its unpivotted position to support a first vessel (4) in a location over said first output (13) so that food within said vessel (4) can be processed by said first attachment; in that said second output (15) is arranged to drive a second attachment having a horizontal rotational axis; and in that said base portion (1) is recessed to locate a second vessel for collecting food processed by said second attachment when said housing (2) is in its pivotted position and to accommodate said second output (15) when said housing (2) is in its unpivotted position.

2. An arrangement as claimed in claim 1 wherein said second output (15) is driven at a lower rotational speed than said first output (13).

3. An arrangement as claimed in claim 1 or 2 wherein said first (13) and second (15) outputs are co-axial.

4. An arrangement as claimed in claim 1, 2 or 3 wherein said housing (2) accommodates a third motor-driven output (14) for rotatably driving a further attachment having a vertical rotational axis, said third output (14) being driven at a higher rotational speed than said first (13) and second (15) outputs.

5. An arrangement as claimed in any preceding claim and including a control panel (5) arranged so that it remains in a fixed position relative to said base portion (1) upon pivotal movement of said housing (2).

6. An arrangement as claimed in any preceding claim and including means for storing food processing attachments.

7. An arrangement as claimed in any preceding claim and including timing means for monitoring processing time of food.

8. An arrangement as claimed in any preceding claim and including temperature sensing means for monitoring the temperature of food being processed.

9. An arrangement as claimed in any preceding claim and including means for weighing food.

## Patentansprüche

1. Nahrungsmittelverarbeitungs-Anordnung mit einem Basisteil (1) und einem Gehäuse (2) zur Aufnahme motorisch angetriebener Getriebemittel (7), die einen ersten (13) und einen zweiten (15) Ausgang aufweisen, wobei die Ausgänge an gegenüberliegenden Seiten des Gehäuses (2) liegen und zum drehbaren Antrieb von entsprechenden Nahrungsmittelverarbeitungs-Zubehörteilen dienen, wobei das Gehäuse (2) drehbar auf dem Basisteil (1) so gelagert ist, daß der erste Ausgang (13) zugänglich ist, wenn sich das Gehäuse (2) in einer nicht gedrehten Lage in bezug auf das Basisteil (1) befindet, und der zweite Ausgang (15) zugänglich ist, wenn sich das Gehäuse (2) in einer gedrehten Lage in bezug auf das Basisteil (1) befindet, dadurch gekennzeichnet, daß der erste Ausgang (13) für den Antrieb eines ersten Zubehörteils mit vertikaler Drehachse ausgebildet ist, daß das Gehäuse (2) so ausgebildet ist, daß es in seiner nicht gedrehten Lage an einem Ort oberhalb des ersten Ausgangs (13) einen ersten Behälter (4) lagert, so daß Nahrungsmittel innerhalb des Behälters (4) von dem ersten Zubehörteil verarbeitet werden können, daß der zweite Ausgang (15) für den Antrieb eines zweiten Zubehörteils mit einer horizontalen Drehachse ausgebildet ist, und daß das Basisteil (1) ausgespart ist, um einen zweiten Behälter zum Sammeln von mit dem zweiten Zubehörteil verarbeiteten Nahrungsmitteln zu lokalisieren, wenn sich das Gehäuse (2) in seiner gedrehten Lage befindet, und um den zweiten Ausgang (15) aufzunehmen, wenn das Gehäuse (2) sich in seiner nicht gedrehten Lage befindet.

2. Anordnung nach Anspruch 1, bei der der zweite Ausgang (15) mit einer niedrigeren Drehgeschwindigkeit angetrieben wird als der erste Ausgang (13).

3. Anordnung nach Anspruch 1 oder 2, bei der der erste Ausgang (13) und der zweite Ausgang (15) koaxial sind.

4. Anordnung nach Anspruch 1, 2 oder 3, bei der das Gehäuse (2) einen dritten motorisch angetriebenen Ausgang (14) zum drehbaren Antrieb eines weiteren Zubehörteils mit vertikaler Drehachse aufnimmt, wobei der dritte Ausgang (14) mit höherer Drehgeschwindigkeit angetrieben wird als der erste (13) und zweite (14) Ausgang.

5. Anordnung nach einem der vorhergehenden Ansprüche, die ein Steuerpult (5) enthält, das so ausgebildet ist, daß es bei der Drehbewegung des Gehäuses (2) in einer festen Lage in bezug auf das Basisteil (1) bleibt.

6. Anordnung nach einem der vorhergehenden Ansprüche mit Mitteln zur Unterbringung von Nahrungsmittelverarbeitungs-Zubehörteilen.

7. Anordnung nach einem der vorhergehenden Ansprüche mit Zeitsteuermitteln zur Überwachung der Verarbeitungszeit von Nahrungsmitteln.

8. Anordnung nach einem der vorhergehenden Ansprüche mit Temperaturfühlmitteln zur Überwachung der Temperatur von verarbeiteten Nahrungsmitteln.

9. Anordnung nach einem der vorhergehenden Ansprüche mit Mitteln zum Wiegen von Nahrungsmitteln.

## Revendications

1. Robot universel de cuisine comprenant une partie formant socle (1) et un boîtier (2) dans lequel sont logés des moyens d'engrenages (7) entraînés par un moteur et ayant une première (13) et une seconde (15) sorties sur des faces opposées dudit boîtier (2) pour entraîner en rotation des accessoires de préparations culinaires respectifs, ledit boîtier (2) étant monté en pivotement sur ladite partie formant socle (1) de telle manière que ladite première sortie (13) soit accessible quand ledit boîtier (2) se trouve dans sa position non pivotée par rapport à ladite partie formant socle (1) et que ladite seconde sortie (15) soit accessible quand ledit boîtier (2) se trouve dans sa position pivotée par rapport à ladite partie formant socle (1), caractérisé par le fait que ladite première sortie (13) est agencée pour entraîner un premier accessoire ayant un axe de rotation vertical; par le fait que ledit boîtier (2) est agencé dans sa position non pivotée pour supporter un premier récipient (4) disposé au-dessus de ladite première sortie (13) afin que les aliments placés dans ledit récipient (4) puissent être préparés par ledit premier accessoire; par le fait que ladite seconde sortie (15) est agencée pour entraîner un second accessoire ayant un axe de rotation horizontal; et par le fait que ladite partie formant socle (1) présente un évidement pouvant recevoir un second récipient destiné à collecter la nourriture traitée par ledit second accessoire quand ledit boîtier (2) se trouve dans sa position pivotée et pour recevoir ladite seconde sortie (15) quand ledit boîtier (2) se trouve dans sa position non pivotée.

2. Robot selon la revendication 1, dans lequel ladite seconde sortie (15) est entraînée à une vitesse de rotation inférieure à celle de la première sortie (13).

3. Robot selon la revendication 1 ou 2, dans lequel ladite première (13) et ladite seconde (15) sorties sont coaxiales.

4. Robot selon la revendication 1, 2 ou 3, dans lequel ledit boîtier (2) reçoit une troisième sortie (14) entraînée par un moteur pour entraîner en rotation un autre accessoire ayant un axe de rotation vertical, ladite troisième sortie (14) étant entraînée à une vitesse de rotation supérieure à celle desdites première (13) et seconde (15) sorties.

5. Robot selon l'une quelconque des revendications précédentes, caractérisé par le fait qu'il comprend en outre un panneau de commande (5) agencé pour rester en position fixe par rapport à ladite partie de socle (1) en cas de mouvement pivotant dudit boîtier (2).

6. Robot selon l'une quelconque des revendications précédentes, caractérisé par le fait qu'il comprend en outre un moyen de stockage des accessoires de préparations culinaires.

7. Robot selon l'une quelconque des revendications précédentes, caractérisé par le fait qu'il comprend un moyen de minuterie pour surveiller la durée de la préparation de la nourriture.

8. Robot selon l'une quelconque des revendications précédentes, caractérisé par le fait qu'il comprend un moyen capteur de température pour surveiller la température des aliments à préparer.

9. Robot selon l'une quelconque des revendications précédentes, caractérisé par le fait qu'il comprend en outre un moyen pour peser les aliments.

0 156 506

FIG.1

FIG.2

1

FIG. 3

FIG.4